Europäisches Patentamt

European Patent Office

Office européen des brevets

(19)

(11) Publication number: **0 241 280**
**A2**

(12)

# EUROPEAN PATENT APPLICATION

(21) Application number: 87303059.7

(22) Date of filing: **08.04.87**

(51) Int. Cl.⁴: **G 01 L 5/10**
**B 21 B 37/00, G 01 B 21/30**

(30) Priority: **10.04.86 GB 8608763**
**03.06.86 GB 8613355**

(43) Date of publication of application:
**14.10.87 Bulletin 87/42**

(84) Designated Contracting States:
**AT BE DE FR GB IT NL SE**

(71) Applicant: **DAVY McKEE (SHEFFIELD) LIMITED**
**Prince of Wales Road**
**Sheffield S9 4EX Yorkshire (GB)**

(72) Inventor: **Lawson, Kenneth Thomas**
**14, Cliffe Lane Hathersage**
**Nr. Sheffield Yorkshire (GB)**

**Kardoosh, Paul George**
**91, Oxspring Bank Herries Road**
**Sheffield Yorkshire (GB)**

(74) Representative: **Kirk, Geoffrey Thomas et al**
**BATCHELLOR, KIRK & EYLES 2 Pear Tree Court**
**Farringdon Road**
**London EC1R 0DS (GB)**

(54) A roll for use in determining the shape of metal strip.

(57) To determine the shape of metal strip moving in the direction of its length, a roller is urged against the underside of the strip and the tension across the width of the strip is a measure of the shape of the strip. To measure the tension, the roll consists of an annular ring fitted around a rotatable arbor but separated therefrom by an elastic body which permits displacement of the ring in the direction towards and away from the arbor. The displacement of the ring relative to the arbor is detected and employed to indicate the tension in the strip.

FIG. /

**Description**

## A ROLL FOR USE IN DETERMINING THE SHAPE OF METAL STRIP

It is most important when rolling metal strip that the resulting strip has a satisfactory shape, that is, that the metal strip will lie flat on a flat surface. Satisfactory shape is obtained by ensuring that the tension in the strip immediately it leaves the mill after rolling is substantially uniform across the width of the strip.

It is well known to employ a shapemeter downstream of a rolling mill stand to measure tension across the width of the strip. As a result of the output from the shapemeter, steps may be taken to effect changes in the shape of the rolls of the mill and/or to adjust the roll gap at one side of the mill relative to the gap at the other side in order to improve the shape.

A shapemeter sold under the Registered Trade Mark VIDIMON consists of a roll rotatable about its longitudinal axis and which bears against the underside of the moving strip. The roll comprises a number of individual rollers arranged side-by-side in the direction of the width of the strip, with each individual roller having means for detecting the pressure applied to the roller by the metal strip.

An object of the present invention is to provide a roll for use in determining the tension in metal strip moving in the direction of its length which is cheaper to manufacture than shapemeter rolls known heretofore.

According to a first aspect of the present invention, a roll for use in determining the tension in metal strip moving in the direction of its length comprises an elongate metal arbor mounted for rotation about its longitudinal axis, an annular ring structure fitted around the arbor but separated therefrom by an elastic body which permits displacement of the ring structure in the direction towards and away from the arbor and means for detecting displacement of the ring structure when the moving strip is wrapped around part of the periphery thereof.

According to a second aspect of the present invention, a roll for use in determining the tension in metal strip moving in the direction of its length comprises an elongate metal arbor mounted for rotation about its longitudinal axis, a plurality of annular ring structures fitted side-by-side around the arbor and each separated therefrom by an elastic body which permits displacement of the ring structure in the direction towards and away from the arbor and each ring structure having means for detecting displacement of the ring structure when the moving strip is wrapped around part of the periphery thereof.

When the moving strip is in contact with the annular ring, the movement of the strip causes the arbor to rotate about its longitudinal axis but, at the same time, the tension in the strip causes the engaged part of the annular ring to be displaced in the direction towards the longitudinal axis of the arbor. By detecting this displacement of the ring, an indication can be obtained of the tension in the strip.

When a plurality of rings are arranged side-by-side on an arbor, the tension across the width of the strip can be determined by detecting the relative displacement of each annular ring relative to the arbor.

The or each elastic body may be of plastics material, such as polyurethane. The plastics material may fill the space between the arbor and the ring or it may be in the form of an annular disc, the outside of which engages the ring and the inside of which engages the arbor.

In an alternative form of the invention, the or each annular ring is separated from a further ring mounted on the arbor by a web and the web constitutes the elastic body.

The displacement of the sleeve may be detected by either a contacting or a non-contacting detecting device which is located outside the ring opposite to that part of the periphery against which the strip is wrapped so that the displacement of the ring is towards and away from the device. In this way, the detecting device which is fixed relative to the axis of the arbor produces an output signal representative of the position of the ring relative to the device.

In an alternative form of the invention, the detecting device may be a load sensitive device which is mounted either on the ring or on the arbor and is embedded in the plastics material. This detecting device serves to detect the displacement of the ring by detecting variations in the load which is applied to the plastics material when the ring is displaced.

In order that the invention may be more readily understood, it will now be described, by way of example only, with reference to the accompanying drawings, in which:-

Figure 1 is a side elevation, partly in section, of part of a roll for use in determining the tension in metal strip in accordance with the present invention;

Figure 2 is an end elevation on the line II-II of Figure 1;

Figures 3, 4, 5 and 6 are side elevations, partly in section, of a roll for use in determining the tension in metal strip in accordance with alternative embodiments of the invention;

Figure 7 is a sectional side elevation of part of a roll in accordance with a still further embodiment of the invention; and

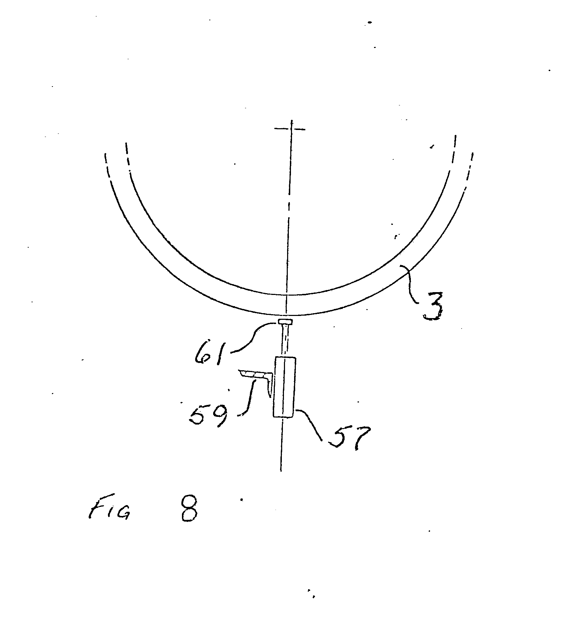

Figure 8 shows diagrammatically a form of detector which could be employed in the embodiments of the invention shown in Figures 3 to 7.

In order to determine the shape of metal strip moving in the direction of its length, an investigation is made into the tension across the width of the strip. To this end, the metal strip is wrapped around part of the periphery of a roll which is urged against the underside of the metal strip.

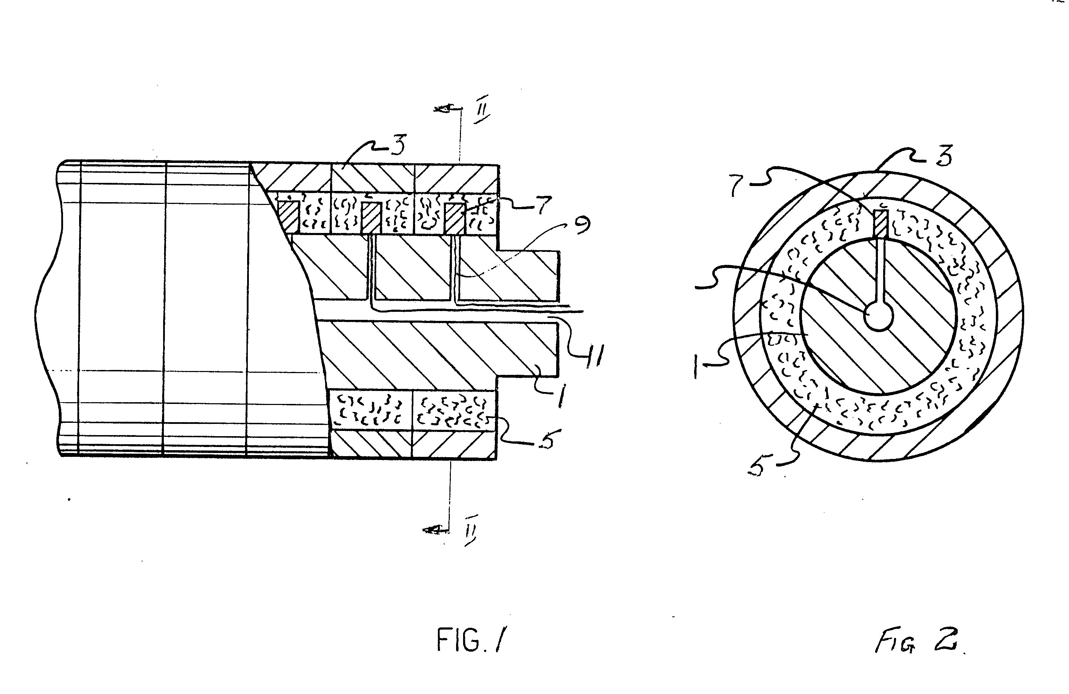

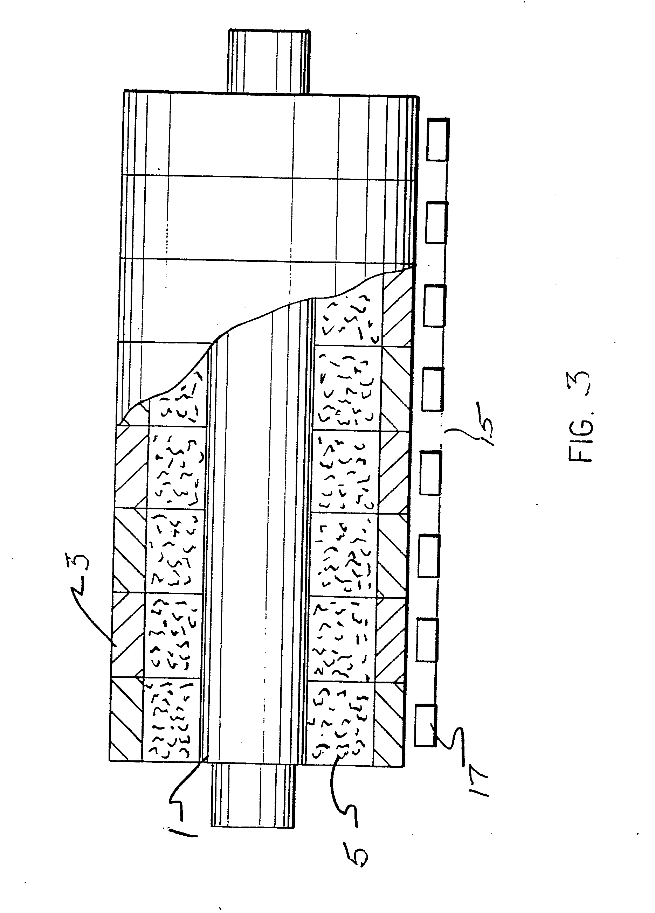

Referring to Figures 1 and 2, an elongate rigid metal arbor 1 is mounted in bearings (not shown) which permit the arbor to rotate about its longitudinal axis. A plurality of rigid annular metal rings 3 are arranged side-by-side around the arbor 1 but they are spaced apart from the arbor. The rings are normally coaxial with the arbor 1 and are separated thereform by individual bodies 5 of elastically deformable plastics material, such as polyurethane. In the arrangement shown in Figures 1 and 2, each ring 3 has a separate body of plastics material 5, whereas, in an alternative form of the invention, a single sleeve of deformable plastics material is positioned between the rings and the arbor.

In use, movement of the strip in the direction of its length causes the roll to rotate about its longitudinal axis and the strip applies forces to each annular ring 3. The forces have a component which displaces the sleeve downwardly with respect to the arbor so that the axis of the sleeve is no longer coincident with that of the arbor. The forces applied to the rings are a measure of the tension in that part of the strip which engages with each ring and, consequently, the displacement of the rings is an indication of the tension across the width of the strip.

The bodies of plastics material permit the rings to be displaced relative to the arbor and, because of the stiffness of the plastics materials, there is no permanent distortion of the plastics material as the rings are displaced with respect to the arbor.

Between the arbor and each ring 3 there is an individual detecting device 7 which detects a variation in load applied to the plastics material as the ring 3 is displaced. The detecting devices 7 may be mounted on the arbor, as shown in Figures 1 and 2, with their electrical connections 9 extending through radial bores in the arbor into a central bore 11 extending coaxial of the arbor. Alternatively, the detecting devices may be mounted on the rings.

To construct the roll, the detecting devices 7, which conveniently take the form of load cells or strain gauges, are mounted in the desired side-by-side position on the surface of the arbor with their electrical leads extending through the bores to the axial bore of the arbor. The load cells or strain gauges may be mounted in a row along the length of the arbor or they may be arranged in helical manner around the periphery of the arbor. The arbor with the load cells/strain gauges mounted on it is held in a jig with the rings 3 surrounding it and polyurethane material is cast into the space between the rings and the arbor to embed the detecting devices 7. Finally, the outer surface of the rings 3 is ground so that the surface is concentric with the axis of the arbor.

The electrical signals from the detecting devices are taken by the leads extending through the bore of the arbor and the leads can rotate with the arbor but slip rings (not shown) could be used to transfer the signals from the leads to external recorders. Alternatively, slip rings could be avoided and other forms of telemetry equipment could be used.

In an alternative embodiment, the signals from the detecting device are converted into optical signals which are received by light sensitive devices.

If one detecting device is provided for each of the rings 3, then one signal is received from each detecting device for each revolution of the roll. However, a plurality of devices could be mounted in angularly spaced apart relation for each of the rings 3.

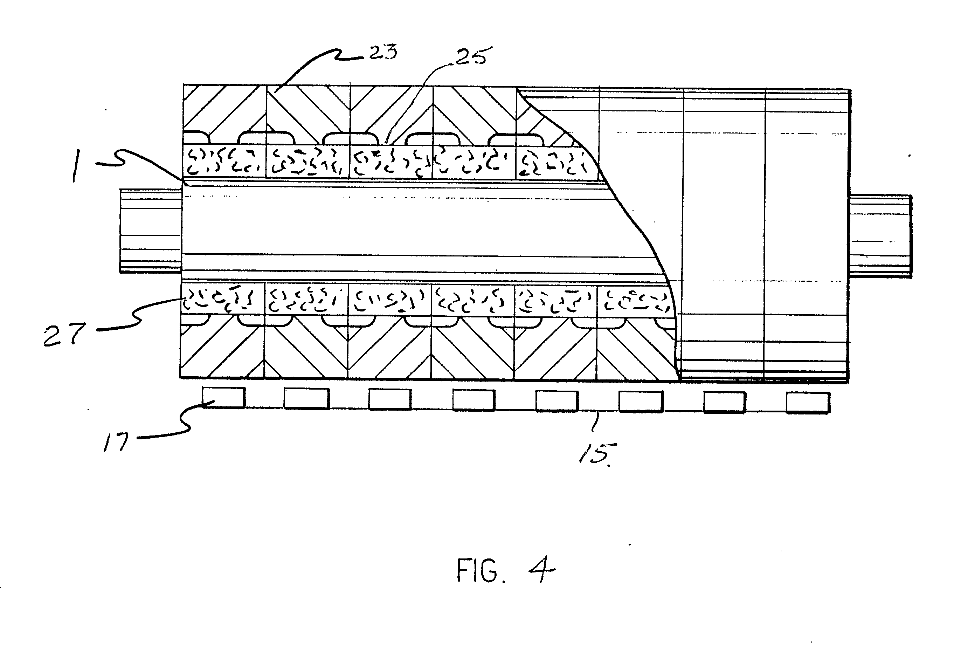

In the embodiment of the invention shown in Figure 3, the rings 3 are separated from the arbor 1 by individual annular bodies 5 of resilient plastics material but, in this embodiment of the invention, the detecting devices are not embedded in the plastics material but are positioned beneath the roll on a fixed surface 15 which is a predetermined distance below the axis of the arbor. Each ring has its own detector 17 and the detectors may be of several different forms. Whatever form the detector takes, however, its purpose is to detect the displacement of its associated ring in the direction at right angles to the longitudinal axis of the arbor as the strip material wraps around part of the periphery of the rings 3. Clearly, therefore, assuming that the strip material wraps around the upper part of the periphery of the roller shown in Figure 3, the detectors 17 are positioned beneath the roller substantially in alignment with the downwardly extending forces on the rings when the strip is in contact with them. The downwardly applied forces on the top of the ring causes the bottom of the ring to move towards the detector.

In the embodiment of the invention shown in Figure 4, each of the rings 23 has an inwardly extending web 25. This web engages with the upper side of an annular body 27 of plastics material which is mounted on the arbor and the area of contact between the web 25 and the body of plastics material is less than the area of contact between the body of plastics material and the arbor. In this way, forces applied to each ring 23 by the strip engaging with it are directed through the narrow web to the plastics material, thus allowing greater movement of the ring towards and away from the axis of the arbor as compared with the arrangement shown in Figure 3, assuming that the same plastics material is employed.

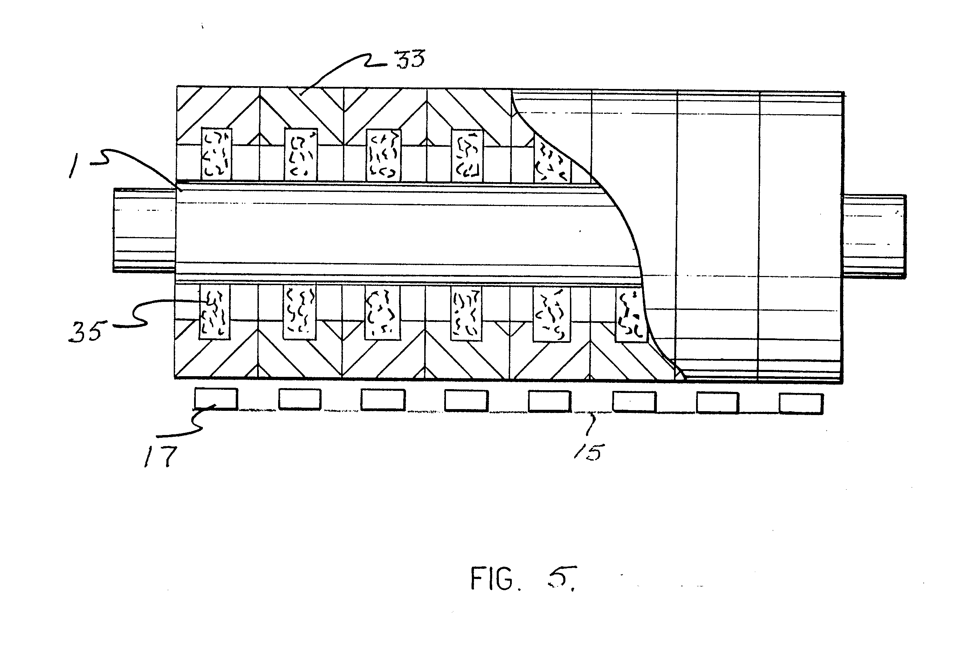

In the arrangement shown in Figure 5, each annular ring 33 has a groove formed on its inner surface and a disc 35 of resilient plastics material has its outer edge inserted into the groove to retain the disc within the ring and its inner surface mounted on the arbor.

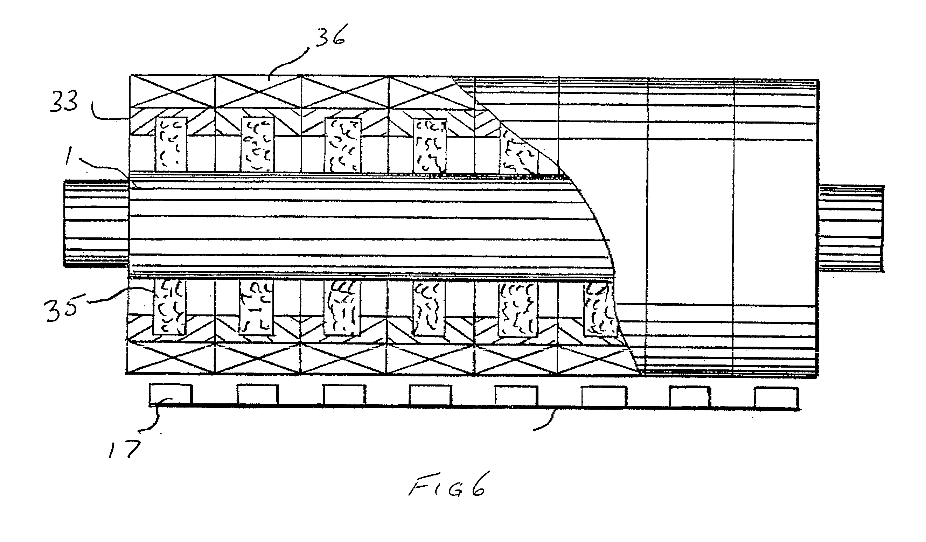

A similar construction is shown in Figure 6 except that a roller or tapered roller bearing 36 is fitted on to the outside of each annular ring 33 to form a ring structure. The inner race of each bearing is fast on the ring 33 and the metal strip is in engagement with the outer races of the bearings. Movement of the strip causes the outer races to rotate and there is very little scuffing between the underside of the strip and the outer races.

In an alternative embodiment of the invention, as shown in Figure 6, each ring 43 is integral with an inner ring 45 and a connecting web 47. The rings are mounted side-by-side on the arbor 1 and the webs 47 have their cross-section reduced by a plurality of annular grooves 49 cut in them. The web 47 thus serves as the elastically deformable body between the ring 43 and the arbor 1.

An end support 51 prevents sideways deflection of the rings when the rings are urged into engagement with the underside of the moving strip, and the forces in the strip push the engaged portion of rings 43 downwardly towards the arbor 1 and the web 47 permits the displacement of the rings 43 towards the arbor. The downward displacement of the rings 43 is detected by detecting devices 17 positioned beneath the roll. The detector may be located at one position, conveniently immediately below the ring in a vertical plane containing the axis of the arbor, or a number of detectors may be positioned around the rings so that any distortion of the rings can be detected.

The detector 17 shown in the drawings may be of the contacting type where a part of the detector is permanently in contact with the ring, or it may be of the non-contacting type where the detector is always spaced from the ring, but where the separation between them varies as the ring is displaced. When a contact method is employed, the transducer or detector is held in contacting relation with the outer surface of the ring by way of a roller or a similar bearing. Similarly, the detector may take the form of a load cell which is mounted vertically below the ring and in contact with the outer surface of the ring by way of a bearing.

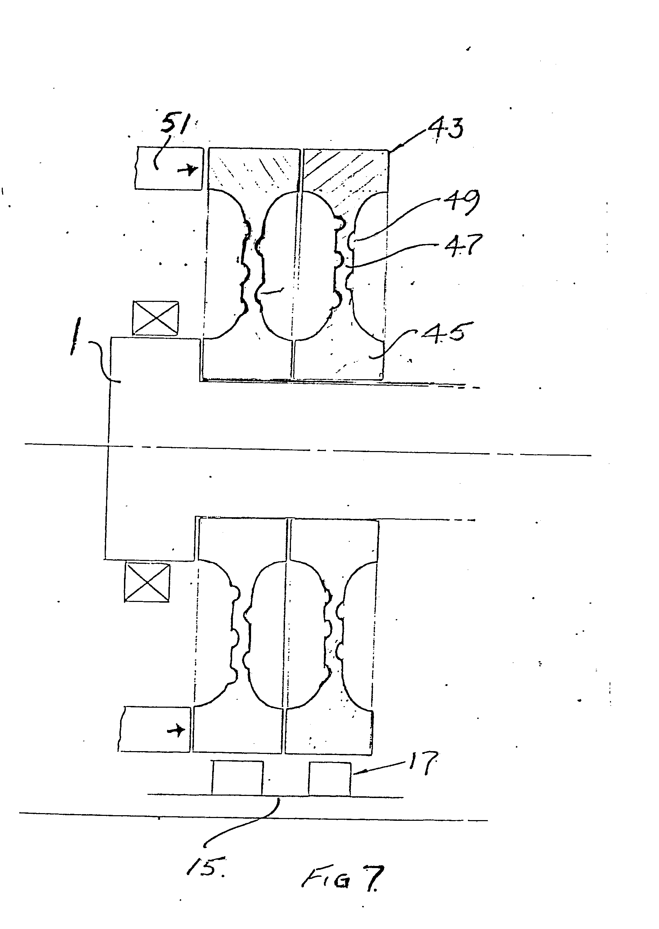

As an example of the type of detector 17, an arrangement is shown in Figure 7 where a position transducer 57 is held rigidly by way of a bracket 59 beneath the ring 3 and in the vertical plane containing the axis of the arbor. A plunger 61 extends from the transducer close to the ring and there is an air cushion formed between the head of the plunger and the adjacent surface of the ring.

Other forms of detector may be employed, such as an eddy current displacement transducer or a laser operated transducer where a laser beam is directed towards a reflector and, depending upon the position of the ring, the laser beam is reflected at a varied angle.

Such a laser device is well known and is offered for sale by MEA INC., 2600, American Lane, Elk Grove Village, Illinois 60007, U.S.A.

## Claims

1. A roll for use in determining the tension in metal strip moving in the direction of its length, said roll comprising an elongate metal arbor (1) mounted for rotation about its longitudinal axis, and an annular ring structure (3) fitted around the arbor, characterised in that the ring structure is but separated from the arbor by an elastic body (5) which permits displacement of the ring structure in the direction towards and away from the arbor and means (7) are provided for detecting displacement of the ring structure when the moving strip is wrapped around part of the periphery thereof.

2. A roll for use in determining the tension in metal strip moving in the direction of its length, said roll comprising an elongate metal arbor (1) mounted for rotation about its longitudinal axis, and a plurality of annular ring structures (3) fitted side-by-side around the arbor, characterised in that each ring structure is separated from the arbor by an elastic body (5) which permits displacement of the ring structure in the direction towards and away from the arbor and each ring structure has means (7) for detecting displacement of the ring structure when the moving strip is wrapped around part of the periphery thereof.

3. A roll as claimed in claim 1 or 2, characterised in that the elastic body is of plastics material.

4. A roll as claimed in claim 2, characterised in that the plastics material fills the space between the arbor and the ring structure.

5. A roll as claimed in claim 2, characterised in that the plastics material is in the form of an annular disc the outside of which engages the ring structure and the inside of which engages the arbor.

6. A roll as claimed in claim 5, characterised in that the area of contact between the annular disc and the ring structure is less than that between the annular disc and the arbor.

7. A roll as claimed in claim 1 or 2, characterised in that the or each annular ring structure comprises a first ring separated from a further ring mounted on the arbor by a web, said web constituting the elastic body.

8. A roll as claimed in claim 7, characterised in that the first ring, the further ring and the web are integral.

9. A roll as claimed in claim 1, in which said elastic body comprises one or more springs.

10. A roll as claimed in claim 3, characterised in that the or each detecting means is mounted either on the ring structure or on the arbor and is embedded in the plastics material, said detecting means serving to detect displacement of the ring structure by detecting variation in the load applied to the plastics material.

11. A roll as claimed in any of the claims 1 to 9, characterised in that the detecting means is mounted outside the ring structure opposite to the part of the periphery against which the strip is wrapped.

12. A roll as claimed in claim 11, characterised in that the detecting means is fixed relative to the axis of the arbor and produces an output signal representative of the position of the ring structure relative thereto.

13. A roll as claimed in claim 12, characterised in that the detecting means is permanently in contact with the ring structure.

14. A roll as claimed in claim 13, characterised in that the detecting means has a part biased into engagement with the ring structure.

15. A roll as claimed in claim 14, characterised in that the detecting means is a load cell.

16. A roll as claimed in claim 11, characterised in that the detecting means is in non-contact relation with the ring structure.

024128C

Fig. 2

FIG. 1

FIG. 3

024128C

23

25

1

27

17

15.

FIG. 4

FIG. 5.

024128C

36

33

1

35

17

FIG6

024128C

0241280

FIG 7.

0241280

FIG 8